# EUROPÄISCHE PATENTSCHRIFT

(11) **EP 1 973 448 B1**
(45) Veröffentlichungstag und Bekanntmachung des Hinweises auf die Patenterteilung: **24.02.2010**
(21) Anmeldenummer: 07702699.5
(22) Anmeldetag: 11.01.2007
(51) Int. Cl.: A47C 7/46

(54) **LORDOSENSTÜTZE**
LORDOSIS SUPPORT
SOUTIEN DE LORDOSE

(30) Priorität: 17.01.2006 DE 102006002230
(43) Veröffentlichungstag der Anmeldung: 01.10.2008
(73) Patentinhaber: Schukra Gerätebau AG, 2560 Berndorf (AT)
(72) Erfinder: PETZEL, Jan, 72074 Tübingen (DE)
(74) Vertreter: Banzer, Hans-Jörg
(86) Internationale Anmeldenummer: PCT/EP2007/000223
(87) Internationale Veröffentlichungsnummer: WO 2007/082682

(56) Entgegenhaltungen:
- WO-A-98/58566
- DE-A1- 4 106 862
- DE-A1- 10 063 478

## Beschreibung

Die vorliegende Erfindung betrifft eine Lordosenstütze, die zur Verstellung der Wölbung einer Sitzlehne mehrere pneumatisch betriebene Kammern aufweist.

Derartige Lordosenstützen werden beispielsweise in Rückenlehnen von Kraftfahrzeugsitzen verwendet. Hierbei kommt den Lordosenstützen eine mehrfache Stützfunktion zu, da sowohl der untere Wirbelsäulenbereich, d.h. der Lenden- oder Lordosenbereich, als auch der mittlere Wirbelsäulenbereich und der obere Wirbelsäulenbereich ausreichend gestützt werden muss, um Ermüdungserscheinungen bei längerem Sitzen sowie gegebenenfalls gesundheitliche Schäden zuverlässig zu vermeiden. Aus diesem Grund ist die Verwendung von Lordosenstützen, deren Wölbung oder Krümmung verstellt werden kann von größter Bedeutung, um den Wölbscheitel an die individuellen Bedürfnisse der jeweiligen Person anpassen zu können, die auf dem Sitz Platz genommen hat. Dies trifft jedoch nicht nur auf Lordosenstützen in Kraftfahrzeugsitzen zu, sondern kann auch bei Rückenlehnen von Sitzen beliebiger Art, beispielsweise Bürostühlen Anwendung finden.

Derartige Lordosenstützen können beispielsweise durch ein Vier-Wege-Steuerelement wie eine Kreuzwippe betätigt werden. Mit einem derartigen. Vier-Wege-Steuerelement kann eine Lordosenstütze mit zwei pneumatisch betriebenen Kammern angesteuert werden. Diese zwei Kammern liegen üblicherweise entlang der Längsrichtung der Rückenlehne. Durch Aufblasen der unteren bzw. oberen Kammer kann ein tieferer bzw. höherer Wölbscheitel erreicht werden. Werden jedoch beide Kammern aufgeblasen, so wird keine zufriedenstellende Geometrie erreicht. Werden mehr als zwei pneumatisch betriebene Kammern verwendet, so ist eine elektronische Steuerung des Luftdrucks in den einzelnen Kammern notwendig, da beispielsweise drei oder mehr Kammern nicht mehr mit dem üblicherweise vorgesehenen Vier-Wege-Steuerelement vollständig gesteuert werden können. Weiterhin ist es auch möglich Systeme mit mehr als drei Kammern mit einem Steuerelement für jede Kammer zu steuern. Hierzu ist jedoch das Anbringen von mehreren Steuerelementen am Sitz notwendig. Eine einfache Bedienung der Lordosenstütze ist dann nicht mehr möglich.

Eine Lordosenstütze nach dem Oberbegriff des Anspruchs 1 ist aus DE 100 63 478 A1 bekannt.

Aufgabe der vorliegenden Erfindung ist die Bereitstellung einer Lordosenstütze, deren Wölbscheitel möglichst variabel einstellbar ist, wobei die Steuerung der Lordosenstütze mit einem möglichst einfachen Steuerelement möglich sein sollte.

Diese Aufgabe wird durch eine Lordosenstütze mit den Merkmalen des Anspruchs 1 gelöst. In den abhängigen Ansprüchen sind bevorzugte Ausführungsformen der Erfindung beschrieben.

Die erfindungsgemäße Lordosenstütze weist erste Kammern auf, die jeweils eine Luftzuführung zur Änderung der Druckluft in der jeweiligen Kammer haben. Weiterhin sind zweite Kammern vorgesehen, die jeweils zur Änderung des Luftdrucks in der Kammer eine Verbindung zu einer ersten Kammer haben, wobei die Kammern teilweise überlappend entlang der Längsrichtung der Sitzlehne angeordnet sind. Durch die Tatsache, dass ein Teil der Kammern eine Luftzuführung aufweist, wobei ein anderer Teil der Kammern keine eigene Luftzuführung aufweist, sondern mit den ersten Kammern verbunden sind, die eine Luftzuführung aufweisen, kann die Anzahl der Luftzuführungen beschränkt werden, so dass auch die Ausbildung des Steuerelements für die Luftzuführungen vereinfacht wird. Durch die teilweise überlappende Anordnung der einzelnen Kammern kann, wie nachfolgend erklärt wird die Lordosenstütze variabel eingestellt werden. Im Sinne der vorliegenden Erfindung bedeutet eine Kammer mit Luftzufuhr, dass diese Kammer direkt mit Druckluft beaufschlagt werden kann. Die anderen Kammern (zweite Kammern) werden selbstverständlich auch mit Druckluft beaufschlagt, jedoch wird diese Druckluft über die Luftverbindung mit einer ersten Kammer zugeführt. Die zweiten Kammern werden demgemäß nicht direkt mit Druckluft beaufschlagt, sondern über die ersten Kammern mit Druckluft versorgt.

Die erfindungsgemäße Lordosenstütze weist in Längsrichtung der Sitzlehne zwei äußere erste Kammern und zwei mittlere zweite Kammern auf, wobei die beiden mittleren Kammern zwischen den beiden äußeren Kammern senkrecht zur Längsrichtung der Sitzebene übereinander angeordnet sind, wobei für jede äußere Kammer eine Luftverbindung mit einer der beiden mittleren Kammern besteht. Mit einer derartigen Anordnung kann der Wölbscheitel der Lordosenstütze sehr variabel eingestellt werden. Ebenso ist eine Höhenverstellung des Wölbscheitels in einem größeren vertikalen Bereich möglich. Durch die Tatsache, dass jede äußere Kammer mit einer der beiden mittleren Kammern in Luftverbindung steht, müssen nur für die äußeren Kammern Luftzuführungen vorgesehen sein. Diese beiden Luftzuführungen können dann mit einem herkömmlichen Vier-Wege-Schalter betätigt werden. Damit kann die erfindungsgemäße Lordosenstütze in jeden Fahrzeugsitz eingebaut werden, eine gesonderte Vorrichtung zur Steuerung der einzelnen Kammern ist nicht notwendig.

Die eine äußere erste Kammer ist mit einer der beiden mittleren Kammern in Luftverbindung, während die andere äußere erste Kammer mit der anderen der beiden mittleren Kammern in Luftverbindung steht. Wird eine der beiden äußeren Kammern mit Druckluft beaufschlagt, wird jeweils eine der beiden mittleren Kammern auch mit Luft gefüllt.

Bevorzugterweise haben die beiden mittleren (zweiten) Kammern in einem mit Druckluft beaufschlagten Zustand jeweils eine geringere Breite in die Richtung der Wölbung der Sitzlehne als die beiden äußeren Kammern. Dies bedeutet, dass in einem vollständig gefüllten Zustand die beiden äußeren Kammern eine größere Ausdehnung senkrecht zur Sitzlehne haben, als jede einzelne mittlere Kammer.

Gemäß einer weiteren bevorzugten Ausführungsform ist die Lordosenstütze über an den beiden mittleren Kammern befestigten Laschen an einer Trägerstruktur der Sitzlehne befestigt. Dies bedeutet, dass die Lordosenstütze nur über die mittleren Kammern an der Sitzlehne befestigt ist, die äußeren Kammern sind nur mit den mittleren Kammern gekoppelt.

Weiterhin können vorzugsweise an jeder mittleren Kammer zumindest zwei, vorzugsweise drei Laschen befestigt sein, wobei diese zumindest zwei Laschen einer Kammer um eine der beiden äußeren Kammern geführt sind und so die äußere Kammer in Position halten. Die an einer mittleren Kammer befestigten Laschen werden vorzugsweise an der einen Seitenfläche und entlang der anderen Seitenfläche der äußeren Kammer geführt. Die andere mittlere Kammer weist ebenso zumindest zwei, vorzugsweise drei Laschen auf, die jeweils um die andere äußere Kammer geführt sind.

Vorzugsweise sind die beiden mittleren Kammern in ihrem mit Luft befüllten Zustand keilförmig ausgebildet, wobei die Keilform in Längsrichtung der Sitzlehne verläuft. Vorzugsweise weist die Keilspitze der einen mittleren Kammer nach oben, während die Keilspitze der anderen mittleren Kammer nach unten weist. Die Keilspitze in dem mit Luft befüllten Zustand kann sich beispielsweise dadurch ergeben, dass die Laschen an der Seitenkante der mittleren Kammer befestigt sind, an der die Keilspitze liegt. Durch die Befestigung der Laschen kann die Geometrie der Kammer im aufgeblasenen Zustand beeinflusst und begrenzt werden, wobei der Teil der Lasche, der an der Kammer befestigt ist, als formgebende Rippe für die Kammer wirkt.

Weiterhin sind bevorzugt zwei Luftzuführungen vorgesehen, eine erste an der einen äußeren Kammer, eine zweite Luftzuführung an der anderen äußeren Kammer. Wenn die eine Kammer druckluftbeaufschlagt wird, wird auch die mit dieser äußeren Kammer in Verbindung stehende mittlere Kammer mit Druckluft beaufschlagt, da die beiden Kammer in Luftverbindung stehen.

Gemäß einer weiteren erfindungsgemäßen Ausführungsform sind die beiden mittleren Kammern derart ausgebildet, dass sie im vollständig mit Luft befüllten Zustand zusammen eine größere Querausdehnung haben als die beiden äußeren Kammern. Wenn beide mittleren Kammern mit Druckluft gefüllt sind, bedeutet dies, dass auch die beiden äußeren Kammern mit Druckluft befüllt sind. Um einen Wölbscheitelpunkt in der Mitte der Lordosenstütze zu erhalten, stehen die beiden mittleren Kammern im gefüllten Zustand weiter vor als die beiden äußeren Kammern ober- bzw. unterhalb der beiden mittleren Kammern.

Gemäß einer weiteren bevorzugten Ausführungsform wird die Luftzuführung an die beiden äußeren Kammern über ein Vier-Wege-Steuerelement gesteuert. Die Steuerung kann beispielsweise dahingehend erfolgen, dass bei Bewegung des Steuerelements in die erste Richtung alle beiden äußeren Kammern mit Druckluft beaufschlagt werden, bei einer Bewegung in die zweite Richtung, die Druckluft aus beiden Kammern entfernt wird. Bei der Bewegung in die dritte Richtung kann beispielsweise die erste äußere Kammer mit Druckluft beaufschlagt werden, während die andere äußere Kammer nicht mir Druckluft beaufschlagt wird, oder eventuell vorhandene Druckluft aus dieser anderen Kammer entfernt wird, während bei der Bewegung des Steuerelements in die vierte Richtung die andere äußere Kammer mit Druckluft beaufschlagt werden kann, während die erste äußere Kammer nicht mit Druckluft beaufschlagt wird oder Druckluft abgezogen wird.

Die Erfindung wird nachfolgend unter Bezugnahme auf die beiliegenden Zeichnungen näher erläutert. Hier zeigen:
- Figur 1: eine Seitenansicht der erfindungsgemäßen Lordosenstütze, und
- Figur 2: eine Vorderansicht der erfindungsgemäßen Lordosenstütze.

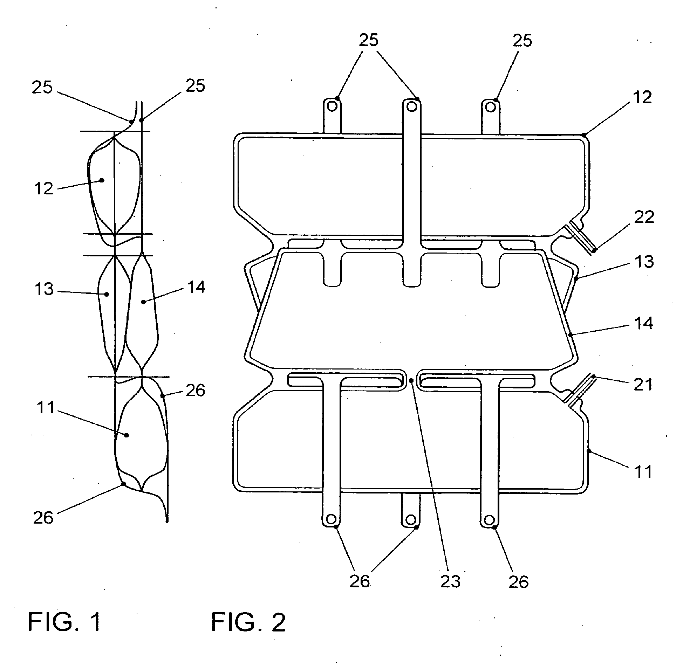

Wie in Figur 1 gezeigt weist die Lordosenstütze zwei äußere pneumatisch betriebene erste Kammern 11 und 12 auf, eine untere Kammer 11 und eine obere Kammer 12. Die beiden äußeren Kammern 11 und 12 stehen jeweils in Luftverbindung mit einer der beiden mittleren zweiten Kammern 13, 14, die senkrecht zur Längsrichtung der Lordosenstütze übereinander liegen. Wie unter anderem in Figur 2 gezeigt weist jeweils die untere Kammer 11 und die obere Kammer 12 eine Luftzufuhr 21 bzw. 22 auf, mit der die Luftzufuhr bzw. die Luftabfuhr für die Kammern 11 und 12 gesteuert wird. Bei der in Figur 2 gezeigten Darstellung steht die Kammer 11 über eine Verbindung 23 in Luftverbindung mit der Kammer 14. Ebenso weist die Kammer 12 eine nicht gezeigte Luftverbindung mit der Kammer 13 auf. Wird nun die Kammer 12 über die Luftzufuhr 22 mit Druckluft beaufschlagt, so füllt sich die Kammer 12 mit Druckluft. Durch die Luftverbindung mit der Kammer 13 wird diese ebenso mit Druckluft beaufschlagt.

Die beiden mittleren Kammern 13 und 14 sind über Laschen 25 und 26 an einer nicht gezeigten Trägerstruktur der Sitzlehne befestigt. In der dargestellten Ausführungsform weist jede mittlere Kammer jeweils drei Befestigungslaschen auf. Diese drei Befestigungslaschen 25 bzw. 26 sind jeweils um eine der beiden äußeren Kammern 12 bzw. 11 geführt und halten die äußeren Kammern 12 und 11 in Position. Bei der in Figur 1 gezeigten Darstellung sind die Laschen 25 bzw. 26 ebenso erkennbar um die obere bzw. untere Kammer geführt.

Wie in Figur 1 zu erkennen ist, sind die beiden mittleren Kammern im gefüllten Zustand im Wesentlichen keilförmig ausgebildet, wobei die Keilspitze an der Kante der Kammer befestigt ist, an der auch die Laschen an der Kammer befestigt sind. Die an den mittleren Kammern befestigten Enden der Laschen 25 bzw. 26 wirken als Rippen, die die Form der Kammern 13 und 14 im aufgeblasenen Zustand beeinflussen und festlegen. Wie aus Figur 1 zu erkennen ist, weist die Keilspitze der Kammer 14 nach oben, wobei die Kammer 14 an diesem Ende mit den Laschen 25 verbunden ist, während die Keilspitze der Kammer 13 nach unten zeigt, wobei an dieser Spitze bzw. Kante der Kammer 13 die Laschen 26 befestigt sind.

Mit der in den Figuren 1 und 2 gezeigten Ausführungsform kann der Scheitelpunkt der Lordosenstütze variabel eingestellt werden. Wird nur die obere Kammer 12 mit Druckluft beaufschlagt, so liegt der Wölbscheitelpunkt auf Höhe der oberen Kammer 12. In diesem Zustand ist die Kammer 14 nicht mit Luft gefüllt, während die. Kammer 13 ebenso teilweise oder vollständig gefüllt ist. In einer anderen Wölbform wird nur die Kammer 11 mit Druckluft beaufschlagt, während die Druckluft aus der Kammer 12 entfernt wird. In diesem Zustand wird auch die Kammer 14 mit Druckluft versehen, während die Kammer 13 ohne Druckluft ist. In dieser Ausführungsform ist der Wölbscheitelpunkt auf Höhe der unteren Kammer 11. Werden nun beide Kammern 11 und 12 mit Druckluft beaufschlagt, so sind die beiden mittleren Kammern 13 und 14 derart ausgebildet, dass der Wölbscheitelpunkt auf Höhe der beiden mittleren Kammern 13 und 14 liegt. Wie aus der oben angegebenen Beschreibung zu erkennen ist, kann mit der erfindungsgemäßen Lordosenstütze ein Wölbscheitelpunkt auf Höhe der Kammer 12, der Kammer 11 oder auf Höhe der Kammern 13 oder 14 erreicht werden. Weiterhin können diese verschiedenen einzelnen Einstellungen mit Hilfe eines einzigen Vier-Wege-Steuerelements beeinflusst werden, wodurch die beschriebene Lordosenstütze in jeden handelsüblichen Fahrzeugsitz eingebaut werden kann. Die vorliegende Erfindung hat eine bessere Druckverteilung als ein herkömmliches Zwei-Kammern-System, das mit einem gleichartigen Steuerelement gesteuert werden kann. Weiterhin kann der Wölbscheitelpunkt in vertikaler Richtung um eine größere Höhe verschoben werden, als bei herkömmlichen Zwei-Kammern-Systemen.

## Patentansprüche

1. Lordosenstütze, die zur Verstellung der Wölbung einer Sitzlehne mehrere pneumatisch betriebene Kammern (11-14) aufweist, mit ersten Kammern (11, 12), die jeweils eine Luftzuführung zur Änderung des Luftdrucks in diesen Kammern haben, sowie mit zweiten Kammern (13, 14), die jeweils zur Änderung des Luftdrucks eine Luftverbindung zu einer der ersten Kammern aufweisen, wobei die Kammern teilweise überlappend entlang der Längsrichtung der Sitzlehne angeordnet sind,
**dadurch gekennzeichnet,**
**dass** die Lordosenstütze in Längsrichtung der Sitzlehne zwei äußere erste Kammern (11, 12) und zwei mittlere zweite Kammern (13, 14) aufweist, wobei die beiden mittleren Kammern (13, 14) zwischen den beiden äußeren Kammern (11, 12) senkrecht zur Längsrichtung der Sitzlehne übereinander angeordnet sind ohne die zwei äußeren ersten Kammern (11, 12) zu überlappen.

2. Lordosenstütze nach Anspruch 1, **dadurch gekennzeichnet, dass** die Lordosenstütze über an den mittleren Kammern befestigte Laschen an einer Trägerstruktur der Sitzlehne befestigt ist.

3. Lordosenstütze nach Anspruch 2, **dadurch gekennzeichnet, dass** an jeder mittleren Kammer zumindest zwei Laschen angebracht sind, die jeweils um eine der beiden äußeren Kammern geführt sind und die die äußere Kammer in Position halten.

4. Lordosenstütze nach einem der vorstehenden Ansprüche, **dadurch gekennzeichnet, dass** die beiden zweiten Kammern im mit Luft beaufschlagten Zustand keilförmig in Längsrichtung der Sitzlehne ausgebildet sind.

5. Lordosenstütze nach Anspruch 4, **dadurch gekennzeichnet, dass** die Keilspitze bei dem Ende der Kammer liegt, an der die Lasche zur Befestigung der Kammer an der Trägerstruktur angeordnet ist.

6. Lordosenstütze nach einem der vorstehenden Ansprüche, **dadurch gekennzeichnet, dass** zwei Luftzuführungen vorgesehen sind, eine erste Luftzuführung für die eine erste Kammer, die andere Luftzuführung für die andere erste Kammer.

7. Lordosenstütze nach einem der vorstehenden Ansprüche, **dadurch gekennzeichnet, dass** die beiden überlappenden Kammern derart ausgebildet sind, dass sie im vollständig mit Luft befüllten Zustand zusammen eine größere Querausdehnung haben als die beiden äußeren Kammern.

8. Lordosenstütze nach einem der vorstehenden Ansprüche, **dadurch gekennzeichnet, dass** die Luftzufuhr für die beiden ersten Kammern über ein Vier-Wege-Steuerelement gesteuert wird.

## Claims

1. Lumbar support, comprising
a plurality of pneumatically operatable chambers (11-14) for adjusting the curvature of a seat back, said plurality of chambers comprising first chambers (11, 12), which each have an air supply for changing the air pressure in these chambers, and second chambers (13, 14), which each comprise an air connection to one of the first chambers for changing the air pressure,
wherein the chambers are arranged with partial overlap along the longitudinal direction of the seat back,
**characterised in that**
the lumbar support comprises two outer first chambers (11, 12) and two central second chambers (13, 14) in the longitudinal direction of the seat back, wherein the two central chambers (13, 14) are arranged over one another perpendicularly to the longitudinal direction of the seat back between the two outer chambers (11, 12) without overlapping the two outer first chambers (11, 12).

2. Lumbar support according to claim 1, **characterised in that** the lumbar support is attached to a supporting structure of the seat back by means of straps attached to the central chambers.

3. Lumbar support according to claim 2, **characterised in that** at least two straps are fitted to each central chamber, which straps are each passed around one of the two outer chambers and hold the outer chamber in position.

4. Lumbar support according to any one of the preceding claims, **characterised in that** the two second chambers are of wedge-shaped construction in the longitudinal direction of the seat back when filled with air.

5. Lumbar support according to claim 4, **characterised in that** the wedge tip is located at the end of the chamber at which the strap is arranged for attaching the chamber to the supporting structure.

6. Lumbar support according to any one of the preceding claims, **characterised in that** two air supplies are provided, these being a first air supply for the one first chamber and another air supply for the other first chamber.

7. Lumbar support according to any one of the preceding claims, **characterised in that** the two overlapping chambers are so constructed that, when completely filled with air, they together extend further in the transverse direction than the two outer chambers.

8. Lumbar support according to any one of the preceding claims, **characterised in that** the air supply for the two first chambers is controlled by means of a four-way control element.

## Revendications

1. Appui lombaire, comportant plusieurs compartiments pneumatiques (11-14) pour le réglage de la cambrure d'un dossier de siège, avec de premiers compartiments (11, 12) pourvus chacun d'une amenée d'air pour varier la pression d'air à l'intérieur des compartiments, et avec de deuxièmes compartiments (13, 14) pourvus chacun d'un raccord pneumatique à un des premiers compartiments pour varier la pression d'air, les compartiments se chevauchant partiellement dans la direction longitudinale du dossier de siège,
**caractérisé**
**en ce que**
l'appui lombaire comporte deux premiers compartiments extérieurs (11, 12) dans la direction longitudinale du dossier de siège, les deux compartiments centraux (13, 14) entre les deux premiers compartiments extérieurs (11, 12) étant superposés l'un à l'autre perpendiculairement à la direction longitudinale du dossier de siège, sans chevaucher les deux premiers compartiments extérieurs (11, 12).

2. Appui lombaire selon la revendication 1, **caractérisé en ce que** l'appui lombaire est fixé à une structure de support du dossier de siège au moyen de pattes fixées sur les compartiments centraux.

3. Appui lombaire selon la revendication 2, **caractérisé en ce qu'**au moins deux pattes sont appliquées contre chaque compartiment central, lesquelles sont passées autour d'un des deux compartiments extérieurs et maintiennent le compartiment extérieur en position.

4. Appui lombaire selon l'une des revendications précédentes, **caractérisé en ce que** les deux deuxièmes compartiments sont réalisés en état d'application d'air, avec une forme en coin dans la direction longitudinale du dossier de siège.

5. Appui lombaire selon la revendication 4, **caractérisé en ce que** la pointe du coin est disposée à l'extrémité du compartiment où est disposée la patte pour la fixation du compartiment contre la structure de support.

6. Appui lombaire selon l'une des revendications précédentes, **caractérisé en ce que** deux conduites d'air sont prévues, une première conduite d'air pour un des premiers compartiments, et une deuxième conduite d'air pour l'autre premier compartiment.

7. Appui lombaire selon l'une des revendications précédentes, **caractérisé en ce que** les deux compartiments qui se chevauchent sont réalisés de manière à présenter, lorsqu'ils sont complètement gonflés par air, une extension transversale supérieure aux deux compartiments extérieurs.

8. Appui lombaire selon l'une des revendications précédentes, **caractérisé en ce que** l'amenée d'air pour les deux premiers compartiments est commandée par un élément de commande à quatre voies.
